# EUROPEAN PATENT APPLICATION

(11) **EP 4 757 011 A1**
(43) Date of publication of application: **10.06.2026**
(21) Application number: 25220779.0
(22) Date of filing: 04.12.2025
(51) Int. Cl.: H01M 50/103, H01M 50/15, H01M 50/627

(54) **CAP FOR SECONDARY BATTERY, METHOD FOR MANUFACTURING A CAP, AND METHOD FOR MANUFACTURING A SECONDARY BATTERY.**

(30) Priority: 05.12.2024 KR 20240179781
(71) Applicant: SK On Co., Ltd., Seoul 03161 (KR)
(72) Inventor: LEE, Seong Yun, 34124 Daejeon (KR); KIM, Sang Mo, 34124 Daejeon (KR); JANG, Su Hyeon, 34124 Daejeon (KR)
(74) Representative: Prüfer & Partner mbB Patentanwälte · Rechtsanwälte

(57) **Abstract**

The present disclosure relates to a cap for a secondary battery, a method for manufacturing the cap, and a method for assembling a secondary battery. The cap comprises an injection hole that penetrates the cap plate; the inlet portion of the hole has an oblique surface whose roughness is greater than that of the adjacent cap surface. The cap manufacturing method includes: forming the injection hole in the cap plate; shaping the inlet portion so its diameter decreases from inlet to outlet, which faces the interior of the battery housing, and creating an oblique surface inclined to the surrounding cap surface; and surface processing the oblique surface to achieve the desired roughness. The battery manufacturing method comprises: producing the cap as described; coupling the cap to one end of the housing; inserting at least one electrode cell into the housing; and sealing the cap to enclose the cell.

## Description

### CROSS REFERENCE TO RELATED APPLICATIONS

The present application claims priority to Korean Patent Application No. 10-2024-0179781, filed on December 05, 2024, the entire contents of which is incorporated herein by reference.

### BACKGROUND

### Technical Field

The present disclosure relates to a secondary battery and a method for manufacturing the secondary battery.

### Description of the Related Art

In general, a secondary battery is a battery capable of being repeatedly used through a discharge process of converting chemical energy into electrical energy and a charging process of converting electrical energy into chemical energy.

Secondary batteries typically include a nickel-cadmium (Ni-Cd) battery, a nickel-metal hydride (Ni-MH) battery, a lithium-metal battery, a lithium-ion (Li-Ion) battery, a lithium-ion polymer battery, and the like.

A lithium secondary battery among the secondary batteries may have a cycle life of more than 500 times and a short charging time of about 1 hour to 2 hours.

Typically, lithium secondary batteries are approximately 30% to 40% lighter than nickel-metal hydride batteries, thereby making weight reduction possible.

Also, the lithium secondary battery has the highest voltage per unit cell among existing secondary batteries and exhibits excellent energy density, thereby providing characteristics optimized for mobile devices.

### SUMMARY

According to one aspect of the present disclosure, it is possible to provide a secondary battery and a method of manufacturing the secondary battery, which minimizes an residual electrolyte in an electrolyte injection hole after electrolyte injection.

According to another aspect of the present disclosure, it is possible to provide a secondary battery and a method of manufacturing the secondary battery, which is widely applied to green technology fields such as electric vehicles, battery charging stations, solar power generation and wind power generation utilizing batteries, and the like.

In one aspect, provided herein is a cap for a secondary battery, comprising an injection hole penetrating the cap; and an inlet portion of the injection hole having an oblique surface, wherein the oblique surface has a surface roughness (Rz) higher than of an adjacent surface of the cap. In one embodiment, the oblique surface has a contact angle with an electrolyte greater than a contact angle of the adjacent surface of the cap. In one embodiment, the inlet portion has a diameter that is wider at the inlet and decreases toward an interior region of the injection hole. In one embodiment, the oblique surface is an inclined surface comprising at least one linear taper. In one embodiment, the oblique surface comprises a concavely curved surface, and wherein an outlet portion of the injection hole has a wider diameter than the inlet. In one embodiment, the oblique surface comprises a convexly curved surface, and wherein an outlet portion of the injection hole has a narrower diameter than the inlet. In one embodiment, the oblique surface has an Rz of about 10.8 µm to about 19.25 µm. In one embodiment, the oblique surface has an Rz of about 10.8 µm to about 19.25 µm. In one embodiment, the oblique surface has an Rz of about 10.8 µm to about 19.25 µm.

In another aspect, provided herein is a method of manufacturing a cap with an electrolyte injection hole for a secondary battery, the method comprising: creating an injection hole in a cap plate for a secondary battery; forming, at an inlet of the injection hole, an inlet portion having a diameter that is wider at the inlet and decreases toward an outlet of the injection hole facing an interior of a housing for the secondary battery and an oblique surface that is oblique to an adjacent surface of the cap, and surface processing the oblique surface to adjust its surface roughness. In one embodiment, the oblique surface is processed to have an Rz of about 10.8 µm to about 19.25 µm. In one embodiment, the method further comprises a step of cleaning the cap. In one embodiment, the oblique surface comprises at least one linearly tapered surface. In one embodiment, the oblique surface is convexly or concavely shaped. In one embodiment, the surface processing comprises laser etching, chrome plating, or nano coating to form micro- or nano-scale protrusions on the oblique surface or comprises spraying fine particles of any one of polypropylene, epoxy resin, and silicone onto the oblique surface.

In another aspect, provided herein is a method of manufacturing a secondary battery, the method comprising: manufacturing a cap according to any embodiment described herein; coupling the cap to an end of a housing of a secondary battery; disposing at least one electrode cell inside the housing; and sealing the cap to the end of the housing to enclose the electrode cell. In one embodiment, the method further comprises injecting electrolyte through the injection hole. In one embodiment, the oblique surface exhibits a contact angle with the electrolyte of at least 120 degrees.

### BRIEF DESCRIPTION OF THE DRAWINGS

FIG. 1 is a left-side view illustrating a secondary battery manufactured using a method of manufacturing a secondary battery according to an exemplary embodiment of the present disclosure.
FIG. 2 is a perspective view illustrating only a cap in FIG. 1.
FIG. 3 is a cross-sectional view illustrating a first exemplary embodiment taken along line A-A' of FIG. 2.
FIG. 4 is a cross-sectional view illustrating a second exemplary embodiment of FIG. 3.
FIG. 5 is a cross-sectional view illustrating a third exemplary embodiment of FIG. 3.
FIG. 6 is a flowchart illustrating a method of manufacturing a secondary battery according to an exemplary embodiment of the present disclosure.

### DETAILED DESCRIPTION OF THE DISCLOSURE

Disclosed herein is a secondary battery and a method for its manufacturing that addresses electrolyte residue accumulation at the electrolyte injection hole. The battery comprises a housing with an interior space and a cap sealing one end. An injection hole penetrates the cap and is formed with an oblique surface at its inlet. The surface has a surface roughness different from that of the surrounding cap and is tuned to minimize electrolyte wettability through a lotus-effect mechanism, thereby reducing residue, preventing welding defects and leakage, facilitating cleaning, and improving productivity.

According to an exemplary embodiment, the cap described in the present disclosure can minimize electrolyte residue around the injection hole. It can also prevent secondary battery deterioration resulting from welding defects and leakage caused by residual electrolyte in the injection hole. Further, manufacture of a cap as described herein facilitates cleaning operations and enhances productivity by reducing the need for additional cleaning steps. In addition, it streamlines manufacturing, lowers production costs, and offers broad applicability.

The various terms used to describe exemplary embodiments of the present disclosure are not intended to limit the present disclosure. It should be noted that singular expressions include plural expressions unless otherwise specified.

When assigning reference numbers to components in a drawing, identical components may be assigned the same reference numbers as much as possible even when shown on different drawings, and similar components may be assigned similar reference numbers.

The drawings may be schematic or exaggerated for the purpose of illustrating the exemplary embodiments. In the present document, expressions such as "have," "may have," "include," or "may include" may refer to the presence of a corresponding feature (e.g., numerical values, functions, operations, or elements such as components), and may not preclude the presence of additional features.

Terms such as "one," "other," "another," "first," and "second" may be used to distinguish one component from another component, and the components may not be limited by these terms.

In one aspect, the present disclosure provides a cap for a secondary battery, comprising: an injection hole penetrating the cap; and an inlet portion of the injection hole having an oblique surface, wherein the oblique surface has a surface roughness (Rz) higher than of an adjacent surface of the cap. The present disclosure also provides a secondary battery, the battery comprising: a housing defining an interior space inside; a cap coupled to and sealing an end of the housing; an injection hole penetrating the cap to communicate with the interior space; and an inlet portion of the injection hole having surfaces oblique to the surface of the cap and to an interior portion of the injection hole. In certain embodiments, the oblique surface has an increased roughness (Rz) as compared to the cap.

Hereinafter, an exemplary embodiment of the present disclosure will be described in detail with reference to the accompanying drawings.

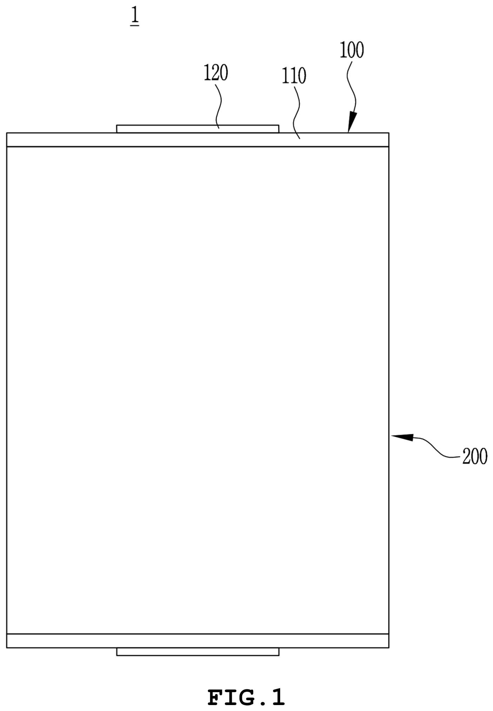

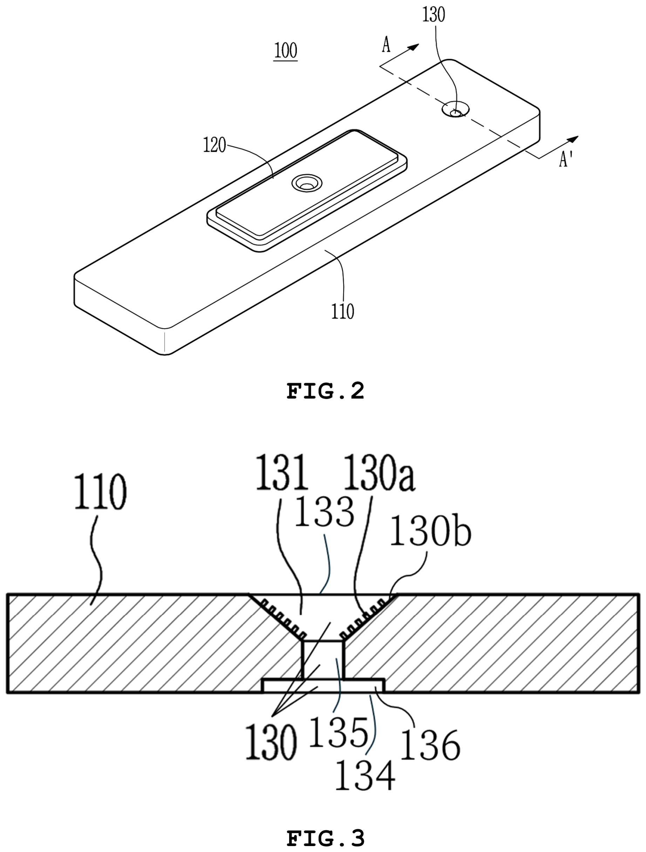

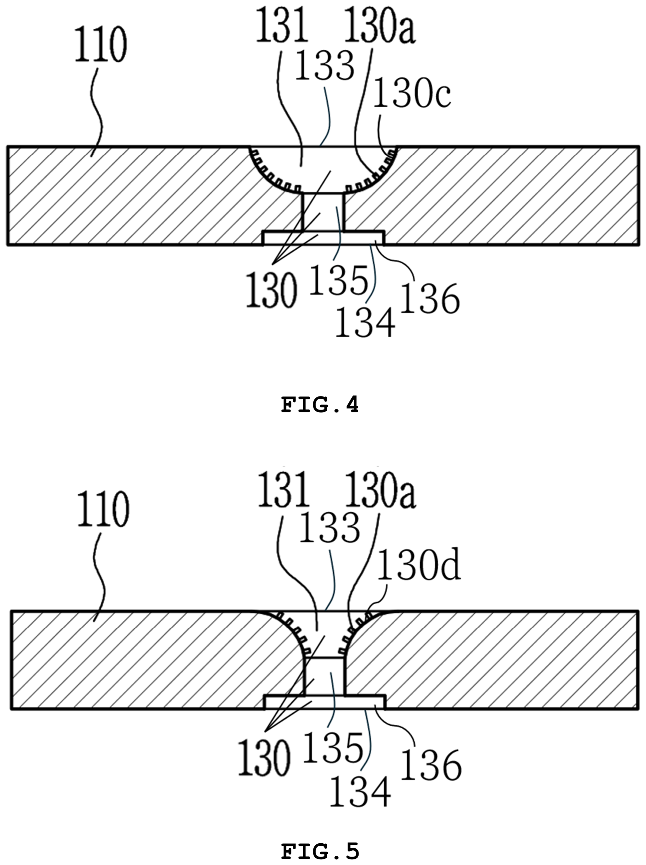

FIG. 1 is a left-side view illustrating a secondary battery manufactured using a method of manufacturing a secondary battery according to an exemplary embodiment of the present disclosure, FIG. 2 is a perspective view illustrating only a cap in FIG. 1, FIG. 3 is a cross-sectional view illustrating a first exemplary embodiment taken along line A-A' of FIG. 2, FIG. 4 is a cross-sectional view illustrating a second exemplary embodiment of FIG. 3, and FIG. 5 is a cross-sectional view illustrating a third exemplary embodiment of FIG. 3.

Referring to FIGS. 1 to 5, a secondary battery 1 according to an exemplary embodiment of the present disclosure may comprise a housing 200 provided with an interior space having an open end, a cap 100 coupled to the open end of the housing 200, an injection hole 130 penetrating through the cap 100 to communicate with the interior space of the housing, and an oblique surface 130b, 130c, 130d provided at an inlet of the injection hole 130, wherein a surface roughness of oblique surface 130b, 130c, 130d is different from that of an adjacent surface of the cap. In certain embodiments, the oblique surface has an angle, relative to an adjacent surface of the cap, of at least 30 degrees, but less than 80 degrees.

The secondary battery 1 according to an exemplary embodiment of the present disclosure may be a cylindrical secondary battery, a prismatic secondary battery, or the like. Also, the secondary battery 1 may comprise the housing 200 and the cap 100.

The housing 200 may be a cylindrical body formed to open one end. Also, the housing 200 may accommodate an electrode assembly and an electrolyte in the accommodation space therein.

The cap 100 may comprise a cap plate 110 and be coupled to an end of the housing 200. That is, the cap 100 may seal the interior of the housing 200 of the secondary battery 1 to prevent the electrolyte inside the secondary battery 1 from leaking to the outside and also prevent the interior from being contaminated with exterior debris.

The cap 100 may be made of any material, such as an aluminum (Al) or a nickel (Ni) plated steel.

The cap 100 may also comprise a terminal 120 positioned on an outer surface of the cap plate 110, and an electrolyte injection hole 130 spaced apart from the terminal 120 and perforating the cap plate 110. The electrolyte injection hole may be provided, e.g., to fill or refill electrolyte in the secondary battery.

The terminal 120 may comprise components electrically connecting the outside of the secondary battery 1 to an electrode assembly disposed in the interior space of the housing 200 of the secondary battery 1. The injection hole 130 provides a flow path through which an electrolyte can be injected from the outside into the interior space of the housing 200.

In some embodiments, the injection hole 130 may comprise a valve that is closed under normal operating conditions and opened only when injecting the electrolyte.

The injection hole 130 may be shaped to facilitate injection of electrolyte.

For example, in one embodiment, such as shown in FIG. 3, an inlet portion 131 of the injection hole 130 comprises an inclined oblique surface 130b (or taper) that is wider at the inlet 133 of the injection hole 130 and narrows towards the outlet 134 of the injection hole 130 where it meets the interior of the housing 200 at an outlet portion 136, which generally has a constant diameter and is wider than an interior portion 135 of the injection hole 130. The diameter of the outlet portion 136 is not particularly limited, and can be wider than the inlet, narrower than the inlet 133, or substantially the same width as the inlet 133. In three-dimensional space, the inclined oblique surface 130b at the inlet portion 131 results in a funnel-like opening at the inlet 133. Although FIG. 3 depicts the inclined oblique surface 130b with a single inclined surface that tapers at a linear or constant ratio, embodiments wherein the inlet portion 131 comprises multiple inclined surfaces, for example, a sub-portion with surfaces of a first steepness proximal to the inlet 133 and a sub-portion with surfaces of a second steepness closer to the outlet 134, which could be described as inclined "steps", are contemplated. For example, a first sub-portion could have a gentle (less steep) incline, and a second sub-portion could have a steeper incline. When the inlet portion 131 of the injection hole 130 comprises a surface with at least one linear taper, electrolyte may be easily introduced into the interior space of the housing 200.

Alternatively, referring to FIG. 4, the inlet portion 131 may comprise a concavely curved oblique surface 130c, resulting in a bowl-like opening at the inlet 133. When paired with an outlet portion 136 having a narrower diameter than the width of the inlet 133 than the outlet portion 136, the hydraulic pressure of the electrolyte injected into the interior space of the housing 200 can be lowered, making it easier to inject electrolyte into the interior housing of the secondary battery.

Alternatively, referring to FIG. 5, the inlet portion 131 may comprise a convexly curved oblique surface 130d. When paired with an outlet portion 136 having a narrower diameter than the width of the inlet 133 than the outlet portion, the hydraulic pressure of the electrolyte injected into the interior space of the housing 200 can be increased, which reduces injection time.

As described above, when the inlet portion 131 of an injection hole 130 comprises a surface with an inclined oblique surface 130b, a concavely curved surface 130c, or convexly curved oblique surface 130d, retention of residual electrolyte within the injection hole 130 after electrolyte injection can be minimized.

In certain embodiments, such as shown in FIGs. 3-5, the surface of the inlet portion 131 may be treated to increase its roughness relative to other surfaces of the cap 100. Roughness results in the formation of protrusions 130a on the oblique surfaces 130b, 130c, 130d of the inlet portion 131. Surface roughness (Rz), as used herein, refers to the degree of regular or irregular unevenness on a surface, such as a metal surface. In certain embodiments, the oblique surfaces 130b, 130c, 130d of the inlet portion 131 may have a surface roughness (Rz) of about 10.8 µm to about 19.25 µm. By roughening the oblique surfaces 130b, 130c, 130d of the inlet portion 131 of the injection hole 130, wettability of the surface by the electrolyte may be minimized via a lotus effect, which is where water does not wet the surface of a lotus leaf due to the presence of numerous tiny hairs or nano-protrusions, and water droplets on the surface tend to form bead-like spheres with high surface tension on the fine hairs. In this way, the high surface tension decreases the liquid surface area. Roughness can be adjusted to tune (minimize) wettability of the surface by the electrolyte.

In certain embodiments, the surface roughness of the inlet portion surfaces 130b, 130c, 130d is tuned to form structures similar to nano-protrusions of a lotus leaf surface, thereby increasing the surface tension between the electrolyte and the oblique surfaces 130b, 130c, 130d of the inlet portion 131.

Although the roughness of the oblique surfaces 130b, 130c, 130d of the inlet portion 131 are not strictly limited to about 10.8 µm to about 19.25 µm, in certain embodiments, when the surface roughness of oblique surface 130b, 130c, 130d of the inlet portion 131 is less than 10.8 µm, the contact angle between the oblique surface 130b, 130c, 130d of the inlet portion 131 and the electrolyte may be too small and a lotus effect may not be achieved. Similarly, in certain embodiments, when the surface roughness of surfaces 130b, 130c, 130d of the inlet portion 131 is greater than about 19.25 µm, the risk of generating defects in the surface increases.

In certain embodiments, the oblique surface 130b, 130c, 130d of the inlet portion 131 exhibits a contact angle with the electrolyte of at least 120 degrees.

A skilled artisan will recognize that the surface tension between the electrolyte and the oblique surfaces 130b, 130c, 130d of the inlet portion 131 may depend on factors such as electrolyte composition (e.g., ion charge, ion size, polarizability of the ions, and concentration of each component, temperature, and hydration energy) and can adjust the roughness as needed with minimal experimentation to achieve the desired lotus effect. Therefore, when the surface roughness of the injection hole 130 is in a range of about 10.8 µm to about 19.25 µm, it is possible to minimize the wettability of the electrolyte and to maximize the lotus effect of the injection hole 130.

Hereinafter, a method of manufacturing a secondary battery according to an exemplary embodiment of the present disclosure will be described in detail with reference to the drawings.

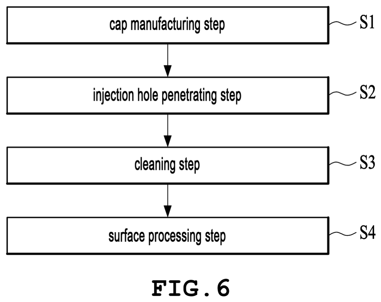

FIG. 6 is a flowchart illustrating a method of manufacturing a secondary battery according to an exemplary embodiment of the present disclosure.

As illustrated in FIG. 6, a method of manufacturing a secondary battery according to an exemplary embodiment of the present disclosure may include a cap manufacturing step (S1) of manufacturing a cap coupled to an open end of a housing of the secondary battery, an injection hole penetrating step (S2) of penetrating an injection hole on the cap, a cleaning step

(S3) of cleaning the cap, and a surface processing step (S4) of changing a surface of the injection hole.

Referring to FIG. 1, the cap manufacturing step (S1) may comprise coupling a cap 100 to a housing 200 to seal the open end of the housing 200 of the secondary battery 1, which may be, for example, a cylindrical secondary battery or a prismatic secondary battery.

Referring to FIGS. 1 to 3, an injection hole is provided in the injection hole 130 penetrating step (S2) by boring a hole through one side of the cap plate 110 of the cap 100. The injection hole 130 may be a passage for injecting the electrolyte into the interior of the housing 200 of the secondary battery 1.

The injection hole 13013 0 may be formed using any one of etching, laser, or drilling. A thus-formed injection hole will have two ends. The end proximal to the top surface of the cap plate 110 may be an inlet 133 and the end proximal to the bottom surface intended to face the interior space of the housing 200 may be an outlet 134. During formation of the injection hole 130, a portion of the injection hole 130 proximal to the inlet (inlet portion 131) 133 may be formed with an inclined or tapered oblique surface 130b, such as shown in FIG. 3, or a convexly or concavely-shaped surface as depicted in FIGS. 4 and 5. By configuring the inlet portion 131 of the injection hole 130 in these manners, the flow path that guides electrolyte to the interior of the housing 200 during injection is widened and remedies an often-faced problem in which the residual electrolyte injected through the injection hole 130 remains after injection.

A method of manufacturing a secondary battery may further comprise a cleaning step (S3) in which impurities, residues, and contaminants from the manufactured cap are removed. Configuring the inlet portion of the inlet hole as described herein may simplify and speed up the cleaning step, as formation of protrusions or other defects may be avoided in the creating of the inclined, convexly, or concavely shaped surfaces.

The surfaces of the inlet portion of the injection hole may be treated to increase their roughness (Rz) during a processing step (S4). As described herein, surface processing (S4) may minimize wettability of the surface by electrolyte.

In one embodiment, roughening the surface comprises laser etching, chrome plating, or nano coating the surface of the inlet portion of the injection hole. In another embodiment, surface processing (S4) may comprise spraying fine particles of any one of polypropylene, epoxy resin, or silicone onto the surface of inlet portion of the injection hole to coat the surface. In such an embodiment, fine particles having an overall convex chape may be coated on the surface of the inlet portion of the injection hole, thereby increasing the contact angle of electrolyte at the surface and further minimizing wettability of the surface by the electrolyte. By minimizing wettability, the often-faced issue of residual electrolyte can be reduced.

The surface roughness (Rz) of the injection hole 130 which is surface processed in the surface processing step (S4) may be in a range of 10.8 µm to 19.25 µm.

The method of manufacturing a secondary battery according to an exemplary embodiment of the present disclosure may perform a welding process for welding the cap 100 to an end of the housing 200 of the secondary battery 1 after the surface processing step (S4).

The present disclosure has been described in detail through specific implementation examples. These implementation examples may be intended to specifically illustrate the present disclosure, the present disclosure may be merely illustrative of the present disclosure and may not limit the scope of the appended claims, it will be apparent to those skilled in the art that various modifications and variations to the exemplary embodiments are possible within the scope and technical spirit of the present disclosure, and it is also natural that such modifications and variations fall within the scope of the appended claims.

## Claims

1. A cap for a secondary battery, comprising:
an injection hole penetrating the cap; and
an inlet portion of the injection hole having an oblique surface, wherein the oblique surface has a surface roughness (Rz) higher than of an adjacent surface of the cap.

2. The cap of claim 1, wherein the oblique surface has a contact angle with an electrolyte greater than a contact angle of the adjacent surface of the cap.

3. The cap of claim 1 or 2, wherein the oblique surface exhibits a contact angle with the electrolyte of at least 120 degrees.

4. The cap of any one of claim 1 to 3, wherein the inlet portion has a diameter that is wider at the inlet and decreases toward an interior region of the injection hole.

5. The battery of any one of claim 1 to 4, wherein the oblique surface is an inclined surface comprising at least one linear taper.

6. The cap of any one of claim 1 to 4, wherein the oblique surface comprises a concavely curved surface, and wherein an outlet portion of the injection hole has a wider diameter than the inlet.

7. The cap of any one of claim 1 to 4, wherein the oblique surface comprises a convexly curved surface, and wherein an outlet portion of the injection hole has a narrower diameter than the inlet.

8. The cap of any one of claim 1 to 7, wherein the oblique surface has an Rz of about 10.8 µm to about 19.25 µm.

9. A method of manufacturing a cap with an electrolyte injection hole for a secondary battery, the method comprising:
creating an injection hole in a cap plate for a secondary battery;
forming, at an inlet of the injection hole, an inlet portion having a diameter that is wider at the inlet and decreases toward an outlet of the injection hole facing an interior of a housing for the secondary battery and an oblique surface that is oblique to an adjacent surface of the cap, and
surface processing the oblique surface to adjust its surface roughness.

10. The method of claim 9, wherein the oblique surface is processed to have an Rz of about 10.8 µm to about 19.25 µm.

11. The method of claim 9 or 10, further comprising a step of cleaning the cap.

12. The method of any one of claim 9 to 11, wherein the oblique surface comprises at least one linearly tapered surface.

13. The method of any one of claim 9 to 11, wherein the oblique surface is convexly or concavely shaped.

14. The method of any one of claim 9 to 13, wherein the surface processing comprises laser etching, chrome plating, or nano coating to form micro- or nano-scale protrusions on the oblique surface or comprises spraying fine particles of any one of polypropylene, epoxy resin, and silicone onto the oblique surface.

15. A method of manufacturing a secondary battery, the method comprising:
manufacturing a cap according to claim 11;
coupling the cap to an end of a housing of a secondary battery
disposing at least one electrode cell inside the housing,
sealing the cap to the end of the housing to enclose the electrode cell.
